# NEUE EUROPÄISCHE PATENTSCHRIFT

(11) **EP 1 557 493 B2**
(45) Veröffentlichungstag und Bekanntmachung des Hinweises auf die Entscheidung über den Einspruch: **14.10.2015**
(45) Hinweis auf die Patenterteilung: 23.11.2011
(21) Anmeldenummer: 05001138.6
(22) Anmeldetag: 20.01.2005
(51) Int. Cl.: E01C 19/48, G01C 22/02

(54) **Verfahren zum Betreiben eines Strassenfertigers**
Method for operating a roadpaver
Méthode pour opérer une finisseuse

(30) Priorität: 22.01.2004 DE 102004003358
(43) Veröffentlichungstag der Anmeldung: 27.07.2005
(73) Patentinhaber: Joseph Vögele AG, 67067 Ludwigshafen (DE)
(72) Erfinder: Buschmann, Martin, 67435 Neustadt a.d.W. (DE); Eul, Achim, 68305 Mannheim (DE); Zegowitz, Günter, 68199 Mannheim (DE)
(74) Vertreter: Grünecker Patent- und Rechtsanwälte PartG mbB

(56) Entgegenhaltungen:
- EP-A- 0 744 494
- DE-A1- 3 909 583
- DE-A1- 19 750 315
- GB-A- 2 255 640
- US-A- 5 044 820
- US-A- 6 115 655
- US-B1- 6 236 924
- D5: W. Niemeier: "GPS-Positionierungen im Hinblick auf Anwendungen im Bauwesen", VDI Berichte Nr. 1454, 1999, S. 75-94
- D6: Olaf Göring: "Satelliten als Wegweiser", Elektrik %/1996, S. 38-43
- D: 7 F. Peyret et al.: "The Computer Integrated Road Construction project", Automation in Construction 9 (2000), S. 447-461
- D8: H. Lee et al.: "Computer-Intergrated Methodologies for Real-Time Control of Asphalt Paving operations", 1998 Proceedings of the 15th ISARC, München, Germany, S.423-431.
- Henning Meyer: "Anwendung von geodätischen positionsmesssystemen in Strassenbaumaschinen", Schriftenreihe der Forschungsvereinigung Bau- und Baustoffmaschinen, Heft 23, 2003.
- D11: Michael O'Connor et al.: "Kinematic GPS for Closed-Loop Control of Farm and Construction Vehicules" ION, GPS-95, Palm Springs, CA, September 12-15, 1995.
- D14: Trimble: Site Vision GPS - Grade Control System, 1999 S. 1-6
- D15: JP 07-180107 A (plus englische Maschinenübersetzung).
- D16: Frank Schrödter: "GPS Satelliten-Navigation", 1994, Franzis'-Verlag, Poing, S. 6-12, 269-283.
- D17: Henning, Meyer: "Anwedung leitdrahtloser maschinensteuerungen bei Strassenfertigern", Der Vermessungsingenieur */2003, S. 188-191.
- D18: Dr. T. Schmitz: "GPS auf Baumaschinen", Tiefbau ç/2001, S. 252-254.
- D19: W. poppy, Th. Bock: "Automation and Robotics Todays Reality in Construction", Proceedings of the 15th International Symposium on Automation and Robotics in Construction, Munich Germany, 1998, S. 423-431.
- D20: Dr. J. Oberbach: "Teer- und Asphaltstrassenbau", 1950, Strassenbau, Chemie und Technik Verlagsgesellschaft m b.H., Heildelberg, S. 212-215.

## Beschreibung

Die Erfindung bezieht sich auf ein Verfahren zum Betreiben eines Straßenfertigers der im Oberbegriff von Anspruch 1 erläuterten Art.

Ein derartiges Verfahren ist aus der EP-A-744 494 bekannt. Diese Druckschrift beschreibt einen Straßenfertiger mit einer Einrichtung zum Feststellen eines Profils einer Oberfläche, die entweder die Oberfläche eines bereits eingebauten Straßenbelages oder die Oberfläche einer Unterlagenschicht vor dem Einbau des Straßenbelages sein kann. Das festgestellte Profil wird positionsabhängig aufgezeichnet, wobei zum Feststellen der Position ein satellitengestütztes Navigationsgerät verwendet wird. Zum Ausgleich der Ungleichmäßigkeiten kann die Glättbohle entsprechend den festgestellten Unregelmäßigkeit gesteuert bzw. eingestellt werden. Wird das Profil vor dem Einbau des Straßenbelages festgestellt, so werden die Profilwerte gespeichert und später beim Einbau des Straßenmaterials zur positionsgenauen Steuerung der Glättbohle bzw. der Asphaltzufuhr verwendet. Unmittelbar anschließend an den Einbau des Straßenbelages kann das erreichte Profil in gleicher Weise wie oben beschrieben abgetastet werden, so dass sich ein Maß für die Glätte des Straßenbelages ergibt. Auch dieses Profil kann zu Dokumentationszwecken positionsgenau erstellt und abgespeichert werden.

Zur wieder findbaren Lokalisierung von Ungleichmäßigkeiten in der Glätte einer Oberfläche ist eine Bestimmung der Wegstrecke zwischen zwei Unregelmäßigkeiten weder beschrieben noch notwendig. Für die Zwecke des Standes der Technik reichte es aus, wenn jeweils die genaue Position der Unregelmäßigkeiten festgestellt wird, ohne dass es auf einen berechneten Abstand zwischen zwei Positionen ankommt. Der berücksichtigte Stand der Technik zeigt somit kein Verfahren, bei dem aus zwei Positionsbestimmungen, bei Beginn eines Einbauvorgangs und bei Beendigung oder beim Unterbrechen eines Einbauvorganges unter Berücksichtigung des Wegverlaufes über Kurven, Steigungen, Gefälle, eine tatsächlich eingebaute Wegstrecke bestimmt und angezeigt wird.

Beim Betrieb von Straßenfertigem zum Einbau von Fahrbahndecken in Straßen, Plätzen oder dergleichen, hat es sich als zweckmäßig erwiesen, zu Kontrollzwecken die eingebaute Wegstrecke nicht nur aus der Straßenlänge und deren Verlauf bzw. den Abmessungen des Platzes zu berechnen, sondern diese tatsächlich nachzumessen. Dies ist insbesondere wichtig wenn die Arbeit unterbrochen wird oder wenn die Tagesleistung festgestellt werden soll. Bislang wurde dies mit einem Messrad, z.B. nach der US 5 044 820, vorgenommen, das vom Straßenfertiger nachgeschleppt wird, oder es läuft ein Arbeiter mit dem Messrad die eingebaute Strecke ab. Beide Verfahren sind nicht sehr genau und, vor allem die letztere Möglichkeit, zeitaufwendig.
Aus dem Artikel "The Computer Integrated Road Construction project", Automation in Construction 9 (2000) S. 447-461, aus dem Artikel "Computer-Integrated Methodologies for Real-Time Control of Asphalt Paving Operations", 1998 Proceedings of the 15th ISARC, München, Deutschland, S. 423 bis 431, und aus der DE 197 50 315 A1 sind Verfahren zur Steuerung von Straßenfertigern unter Verwendung von Navigationssystemen bekannt, auch in Echtzeit. Der Artikel "Anwendung von geodätischen Positionsmesssystemen in Straßenbaumaschinen", H. Meyer, Schriftenreihe der Forschungsvereinigung Bau- und Baustoffmaschinen 2003, Heft 23, weist darauf hin, dass ein bisher benutztes Wegmessrad durch ein GPS-System ersetzt werden könne.

Der Erfindung liegt die Aufgabe zugrunde, ein genaues und schnelles Verfahren zum Bestimmen einer von einem Straßenfertiger eingebauten Wegstrecke bereitzustellen.

Die Aufgabe wird durch die im Anspruch 1 gegebenen Merkmale gelöst.

Durch die erfindungsgemäße Ausgestaltung unter Verwendung bekannter Navigationssysteme, wie beispielsweise satellitengestützte Systeme, wie GPS, ist eine sehr genaue Positionsbestimmung des Straßenfertigers möglich, wobei dann aus den Positionsbestimmungen beim Beginn des Einbaus und beim Ende des Einbaus und dem Wegverlauf (Kurven, Steigungen) die exakte Wegstrecke einfach und schnell ermittelt werden kann.

Dies ist umso einfacher möglich, da die Verwendung derartiger Navigationssysteme bei Straßenfertigem bereits bekannt ist, beispielsweise um sicher zu stellen, dass durch einen manuell gelenkten Straßenfertiger die vorgegebene Route beibehalten wird, oder um automatisch fahrende Straßenfertiger in gewünschter Weise zu lenken. Wäre somit ein Straßenfertiger bereits zur Arbeit mit diesen Navigationssystemen ausgerüstet, so könnte auf kostengünstige Weise zur Durchführung des erfindungsgemäßen Verfahrens auf bereits bestehende Komponenten zurückgegriffen werden.

Vorteilhafte Weiterbildungen in der Erfindung sind den Unteransprüchen zu entnehmen.

Ausführungsbeispiele des erfindungsgemäßen Verfahrens werden nachfolgend erläutert.

Zur Durchführung des erfindungsgemäßen Verfahrens wird ein Straßenfertiger mit den entsprechenden Komponenten ausgerüstet, die für das zu verwendende Navigationssystem notwendig sind. Als Navigationssystem kann ein satellitengestütztes System, wie GPS oder jedes System verwendet werden, dass in der Lage ist, einen Straßenfertiger zumindest über diejenige Strecke zu verfolgen, die der Straßenfertiger in einer maximalen Arbeitseinheit (beispielsweise Tagesleistung, Fahrt ohne Unterbrechung oder dgl.) zurücklegt. Diese Komponenten sind bekannt und auf dem Markt erhältlich.

Ein derartiges Navigationssystem wird erfindungsgemäß zum Erfüllen der verschiedensten Aufgaben eines Straßenfertigers eingesetzt, wobei mit Hilfe dieses Navigationssystems auf einfache Weise die tatsächlich eingebaute Wegstrecke bestimmt werden kann. Zu diesem Zweck wird sichergestellt, dass bei Einbaubeginn eine erste Positionsbestimmung des Straßenfertigers stattfindet. Es wird weiterhin sichergestellt, dass eine weitere Positionsbestimmung stattfindet, sobald der Einbau beendet ist oder unterbrochen wird, beispielsweise, sobald der Fertiger steht, sobald der Vorratsbehälter leer ist, sobald Einbauförderer, wie beispielsweise Verteilerschnecke, abgeschaltet werden und dergleichen. Aus diesen beiden Positionsbestimmungen wird anschließend unter Berücksichtigung des Wegeverlaufs über Kurven, Steigungen, Gefälle oder dergleichen, die zurückgelegte Wegstrecke durch Berechnung bestimmt angezeigt und gegebenenfalls gespeichert. Der Wegverlauf kann ebenfalls über das Navigationssystem festgestellt werden, beispielsweise durch zwischenzeitliche Positionsbestimmungen in genügend kleinem Abstand, um alle Richtungsänderungen erfassen zu können. Der Wegverlauf kann jedoch auch berechnet und anschließend angezeigt werden.

Die gewonnene Information über die festgestellte Streckenlänge wird weiterhin in Beziehung gesetzt zu anderen Parametern, wie beispielsweise dem Verbrauch an Einbaumaterial, wobei anhand der tatsächlich gemessenen Wegstrecke der theoretische Verbrauch errechnet und mit dem tatsächlichen Verbrauch verglichen wird, wobei Fehler frühzeitig festgestellt werden können. Es erfolgt bei Feststellen eines derartigen Fehlers eine Fehlermeldung und die Abweichungen können angezeigt und gegebenenfalls gespeichert werden.

Weiterhin können mit Hilfe des Navigationssystems auf einfache Weise Planungsdaten wegabhängig angezeigt werden. Zur Durchführung seiner Aufgaben erhält der Fahrzeugführer ein sogenanntes Deckenbuch, in dem die genaue Konstruktion und Ausbildung der einzubauenden Fahrbahndecke vermerkt ist. So sind beispielsweise die Stellen vermerkt, an denen Gullydeckel eingebaut werden müssen, es sind Parkbuchten, Straßenverbreiterungen oder dgl. vermerkt. Erfindungsgemäß werden diese Planungsdaten und andere Deckenbuch-Informationen gespeichert und mit der über das Navigationssystem festgestellten tatsächlichen und momentanen Position des Straßenfertigers abgeglichen. Auf diese Weise kann eine Anzeige an den Fahrzeugführer erfolgen, dass an einer bestimmten Stelle beispielsweise ein Gullydeckel oder eine Parkbucht geplant ist. Bevorzugt erfolgt die Anzeige eine vorbestimmte Wegstrecke vorher, beispielsweise in der Größenordnung von wenigen Metern, je nach Fahrzeuggeschwindigkeit, so dass der Fahrzeugführer entsprechend reagieren und die notwendigen Maßnahmen einleiten kann (beispielsweise Ausfahren von Verlängerungsbohlen oder dgl.).

Das Navigationssystem kann weiterhin zum Betreiben eines Straßenfertigers unterstützend eingesetzt werden, beispielsweise durch eine wegabhängige Erfassung und Anzeige von Einbaudaten. So ist es beispielsweise wichtig, eine Querneigung bei Kurvenüberhöhungen nachzuvollziehen und zu dokumentieren. Die Querneigung wird durch Neigungssensoren am Straßenfertiger festgestellt und bezogen auf die festgestellte Position des Straßenfertigers zum Messzeitpunkt gespeichert. Weiterhin können diese Messdaten mit vorab eingespeicherten Soll-Planungsdaten für die notwendige Kurvenüberhöhung und das Kurvenprofil verglichen werden und bei Abweichung eine Fehlermeldung abgesetzt werden. Bevorzugt folgt dieser Vergleich direkt am Einbauort oder eine kurze Wegstrecke von wenigen Metern dahinter, so dass Korrekturen noch möglich sind.

Das Navigationssystem kann jedoch auch für weitere Aufgaben beim Betreiben eines Straßenfertigers eingesetzt werden. Alle gewonnenen Daten können sofort angezeigt oder gespeichert werden, wobei die Anzeige am Straßenfertiger selbst, an das Bedienpersonal gerichtet und/oder extern, bevorzugt bezogen auf den bestimmten Straßenfertiger oder die bestimmte Arbeitsaufgabe, in einer Zentrale erfolgen kann. Auch eine Speicherung der Daten kann am Straßenfertiger selbst oder zentral, wiederum bevorzugt auf den bestimmten Straßenfertiger oder die bestimmte Arbeitsaufgabe bezogen, erfolgen.

## Patentansprüche

1. Verfahren zum Betreiben eines Straßenfertigers, wobei bei Beginn eines Einbauvorgangs eine erste Positionsbestimmung über ein Navigationssystem erfolgt, **dadurch gekennzeichnet, dass** eine zweite Positionsbestimmung über das Navigationssystem erfolgt, sobald der Einbau beendet oder unterbrochen wird,
dass aus der ersten und der zweiten Positionsbestimmung unter Berücksichtigung des Wegverlaufs, über Kurven, Steigungen, Gefälle, eine tatsächlich eingebaute Wegstrecke bestimmt und angezeigt wird,
und dass die tatsächlich eingebaute Wegstrecke mit von der Wegstrecke abhängigen Parametern, insbesondere einem Materialverbrauch, verglichen und bei Abweichung von einem vorbestimmten Verhältnis eine Fehlermeldung gegeben wird.

2. Verfahren nach Anspruch 1, **dadurch gekennzeichnet, dass** eine im Wesentlichen kontinuierliche Positionsbestimmung des Straßenfertigers erfolgt.

3. Verfahren nach Anspruch 2, **dadurch gekennzeichnet, dass** der Wegverlauf über das Navigationssystem bestimmt wird.

4. Verfahren nach Anspruch 2 oder 3, **dadurch gekennzeichnet, dass** wegabhängig Planungsdaten angezeigt werden.

5. Verfahren nach Anspruch 4, **dadurch gekennzeichnet, dass** die Anzeige der Planungsdaten eine vorbestimmte Wegstrecke vorher erfolgt.

6. Verfahren nach einem der Ansprüche 1 bis 5, **dadurch gekennzeichnet, dass** wegabhängig Einbaudaten erfasst und gespeichert und/oder angezeigt werden.

7. Verfahren nach Anspruch 6, **dadurch gekennzeichnet, dass** die Anzeige der Einbaudaten eine vorbestimmte Wegstrecke später erfolgt.

8. Verfahren nach einem der Ansprüche 4 bis 7, **dadurch gekennzeichnet, dass** die Anzeige der Daten am Straßenfertiger und/oder außerhalb des Straßenfertigers erfolgt.

## Claims

1. A method for operating a road finisher, in which, at the beginning of an installation procedure, a first determination of position is performed using a navigation system, **characterised in that** a second determination of position is performed using the navigation system as soon as installation is complete or interrupted, **in that** a length of route which has actually been installed is determined from the first and the second determinations of position that were performed, taking into account the course of the route through bends and over upward and downward inclines, and is displayed, and **in that** the length of route which has actually been installed is compared with parameters which are dependent on the length of route, in particular material usage, and if there is a deviation from a predetermined ratio an error message is produced.

2. A method according to Claim 1, **characterised in that** the position of the road finisher is determined substantially continuously.

3. A method according to Claim 2, **characterised in that** the course of the route is determined using the navigation system.

4. A method according to Claim 2 or 3, **characterised in that** planning data are displayed as a function of the route.

5. A method according to Claim 4, **characterised in that** display of the planning data takes place a predetermined length of route in advance.

6. A method according to one of Claims 1 to 5, **characterised in that** installation data are captured and stored and/or displayed as a function of the route.

7. A method according to Claim 6, **characterised in that** display of the installation data takes place a predetermined length of route later.

8. A method according to one of Claims 4 to 7, **characterised in that** the data is displayed on the road finisher and/or externally to the road finisher.

## Revendications

1. Procédé pour faire fonctionner une finisseuse, étant précisé qu'au début d'une opération de pose, une première localisation a lieu par l'intermédiaire d'un système de navigation, **caractérisé en ce qu'**une seconde localisation a lieu par l'intermédiaire du système de navigation dès que la pose est terminée ou interrompue, **en ce que**, à partir des première et seconde localisations, une distance réellement revêtue est définie et affichée compte tenu du tracé de la route, par l'intermédiaire de courbes, de pentes montantes, de pentes descendantes, et **en ce que** la distance réellement revêtue est comparée à des paramètres dépendant de la distance, en particulier à une consommation de matériau, et en cas d'écart par rapport à un rapport prédéfini, un message d'erreur est émis.

2. Procédé selon la revendication 1, **caractérisé en ce qu'**une localisation globalement continue de la finisseuse a lieu.

3. Procédé selon la revendication 2, **caractérisé en ce que** le tracé de la route est défini par l'intermédiaire du système de navigation.

4. Procédé selon la revendication 2 ou 3, **caractérisé en ce que** des données de planification sont affichées en fonction de la route.

5. Procédé selon la revendication 4, **caractérisé en ce que** l'affichage des données de planification a lieu avant qu'une distance prédéfinie ne soit parcourue.

6. Procédé selon l'une des revendications 1 à 5, **caractérisé en ce que** des données de pose sont saisies et mises en mémoire et/ou affichées en fonction de la route.

7. Procédé selon la revendication 6, **caractérisé en ce que** l'affichage des données de pose a lieu après qu'une distance prédéfinie a été parcourue.

8. Procédé selon l'une des revendications 4 à 7, **caractérisé en ce que** l'affichage des données a lieu sur la finisseuse et/ou à l'extérieur de la finisseuse.
